# EUROPEAN PATENT APPLICATION

(11) **EP 4 589 989 A1**
(43) Date of publication of application: **23.07.2025**
(21) Application number: 24813092.4
(22) Date of filing: 29.11.2024
(51) Int. Cl.: H04R 3/14, H04R 3/04, H04R 5/04, H04R 1/34

(54) **ELECTRONIC DEVICE AND ELECTRONIC DEVICE CONTROL METHOD**

(30) Priority: 01.12.2023 KR 20230172483
(71) Applicant: Samsung Electronics Co., Ltd, Suwon-si, Gyeonggi-do 16677 (KR)
(72) Inventor: KIM, Jongbae, Suwon-si Gyeonggi-do 16677 (KR)
(74) Representative: Appleyard Lees IP LLP
(86) International application number: PCT/KR2024/019375
(87) International publication number: WO 2025/116645

(57) **Abstract**

Disclosed are an electronic device and a controlling method of an electronic device. The device includes: a speaker including a crossover filter configured to separate an input audio signal into a plurality of different frequency bands and a plurality of speaker units each corresponding to the plurality of frequency bands; a memory storing data for music content; and a processor configured to adjust a slope related to a range where the crossover filter filters the audio signal of each of the plurality of frequency bands based on at least one of a property of the music content or a user taste for sound, and control the crossover filter to filter the audio signal corresponding to the music content based on the adjusted slope while the music content is output through the speaker.

## Description

### [Technical Field]

The present disclosure relates to electronic devices and methods of controlling an electronic device, and more particularly relates to electronic devices and methods which control a crossover filter.

### [Background Art]

As part of the ongoing development of speaker-related technology, there is a trend towards a higher resolution, a higher sound quality, the application of wireless technology and smart functions, size reduction, and more efficient energy use.

The performance of a crossover filter, which allows each speaker unit to operate in an optimal frequency range, is an important issue in multi-way speaker technology, that it, in speaker technology that uses a plurality of individual speaker units or drivers to reproduce sound in different frequency bands.

However, the typically crossover filters are of limited functionality, considering different user tastes and requirements, and provide only the balance of frequency response or crossover frequency as adjustable, with the slope of the crossover filter fixed to a predetermined value.

Therefore, there is an need for technology that can provide sound more suited to various properties of music content, and reproduce music content that better matches tastes of individual users.

### [Disclosure]

### [Technical Solution]

The present disclosure provides an electronic device and a controlling method of an electronic device that may control a crossover filter based on a property of music content and a user taste.

According to one or more embodiments of the present disclosure, provided is an electronic device including: a speaker including a crossover filter configured to separate an input audio signal into a plurality of different frequency bands and a plurality of speaker units each corresponding to the plurality of frequency bands; a memory storing data for music content; and a processor configured to adjust a slope related to a range where the crossover filter filters the audio signal of each of the plurality of frequency bands based on at least one of a property of the music content or a user taste for sound, and control the crossover filter to filter the audio signal corresponding to the music content based on the adjusted slope while the music content is output through the speaker.

The data may include metadata indicating the property of the music content, and the processor may be configured to identify the property of the music content based on the metadata.

The device may further include an input device, wherein the processor is configured to adjust the slope based on the at least one of the user taste or the property of the music content in case of receiving a user input for selecting the user taste through the input device.

The processor may be configured to identify the property of the music content based on at least one of a music content genre, a music content performer, or an instrument type used in the music content, included in metadata.

The plurality of speaker units may include a woofer that outputs the sound of a low frequency band and a tweeter that outputs the sound of a frequency band higher than the low frequency band.

The processor may be configured to adjust the slope to correspond to a first filter in case that the property of the music content is a first property that includes a transient feature of a predetermined threshold level or above, and adjust the slope to correspond to a second filter having a slope higher than the first filter in case that the property of the music content is a second property that includes the transient feature below the threshold level.

The device may further include a sensor device including at least one sensor, wherein the processor is configured to acquire information for a user listening height through the sensor device, and control the speaker to output the music content by compensating for delay caused by a difference between the listening height and a reference height in case that the difference between the user listening height and the predetermined reference height is a threshold value or more.

The processor may be configured to acquire information for at least one user location through the sensor device, and adjust the slope to correspond to a third filter having a slope higher than the second filter in case of identifying that the at least one user location is outside a predetermined threshold range based on the information for the user location.

The processor may be configured to identify the property of the music content for each section in the music content based on a pattern of the audio signal corresponding to the music content while the music content is output through the speaker, adjust the slope for each section based on the property of the music content identified for each section, and control the crossover filter to filter the audio signal corresponding to the music content based on the slope adjusted for each section.

The device may further include an output device, wherein the processor is configured to control the output device to output information for guiding a type of filter corresponding to the adjusted slope while the music content is output through the speaker.

The processor may be configured to identify the property of the music content by inputting metadata into a neural network model trained to output information for the property of the music content.

According to one or more embodiments of the present disclosure, provided is controlling method of an electronic device, the method including: adjusting a slope related to a range where a crossover filter, included in a speaker and separating an input audio signal into a plurality of different frequency bands, filters the audio signal of each of the plurality of frequency bands, based on at least one of a property of music content or a user taste for sound; and controlling the crossover filter to filter the audio signal corresponding to the music content based on the adjusted slope while the music content is output.

The method may further include identifying the property of the music content based on metadata indicating the property of the music content.

In the adjusting of the slope, the slope may be adjusted based on the at least one of the user taste or the property of the music content in case that a user input for selecting the user taste is received.

In the identifying of the property of the music content, the property of the music content may be identified based on at least one of a music content genre, a music content performer, or an instrument type used in the music content, included in metadata.

The plurality of speaker units may include a woofer that outputs the sound of a low frequency band and a tweeter that outputs the sound of a frequency band higher than the low frequency band.

The adjusting of the slope may include: adjusting the slope to correspond to a first filter in case that the property of the music content is a first property that includes a transient feature of a predetermined threshold level or above; and adjusting the slope to correspond to a second filter having a slope higher than the first filter in case that the property of the music content is a second property that includes the transient feature below the threshold level.

The method may further include: acquiring information for a user listening height through the sensor device; and controlling the speaker to output the music content by compensating for delay caused by a difference between the listening height and a reference height in case that the difference between the user listening height and the predetermined reference height is a threshold value or more.

The method may further include: acquiring information for at least one user location through the sensor device; and adjusting the slope to correspond to a third filter having a slope higher than the second filter in case that the at least one user location is identified as being outside a predetermined threshold range based on the information for the user location.

According to one or more embodiments of the present disclosure, provided is a non-transitory computer readable recording medium which includes a program for executing a controlling method of an electronic device, the method as described in the above aspect.

According to the present invention there is provided an apparatus and method as set forth in the appended independent claims. Other features of the invention will be apparent from the dependent claims, and the description which follows.

### [Description of Drawings]

FIG. 1 is a block diagram schematically showing a configuration of an electronic device according to an embodiment of the present disclosure;
FIG. 2 is a diagram for explaining a slope of a first filter;
FIG. 3 is a diagram for explaining a slope of a second filter;
FIG. 4 is a block diagram showing a specific configuration of the electronic device according to an embodiment of the present disclosure;
FIGS. 5 and 6 are diagrams for explaining controlling a speaker based on a user listening height;
FIG. 7 is a diagram for explaining controlling a speaker based on a user location;
FIG. 8 is a flowchart showing a controlling method of an electronic device according to an embodiment of the present disclosure, and
FIG. 9 is a sequence diagram showing operations of the electronic device and an audio output device according to an embodiment of the present disclosure.

### [Best Mode]

The present disclosure includes several embodiments, and specific embodiments of the present disclosure are thus shown in the drawings and described in detail in the detailed description. However, it is to be understood that various modifications, equivalents and/or alternatives are possible. Throughout the accompanying drawings, similar components are denoted by similar reference numerals.

Detailed descriptions of known functions or configurations related to the present disclosure are omitted, to avoid unnecessarily obscuring the gist of the present disclosure.

In addition, the following embodiments may be modified into various different forms, these embodiments being provided to make the present disclosure thorough and complete, being provided to sufficiently transfer the concept of the present disclosure to those skilled in the art.

Terms used in the present disclosure are used only to describe the specific embodiments rather than limiting the scope of the present disclosure. A term of a singular number may include its plural number unless explicitly indicated otherwise in the context.

In the present disclosure, the expression "have", "may have", "include", "may include" or the like, indicates existence of a corresponding feature (for example, a numerical value, a function, an operation or a component such as a part), and does not exclude existence of an additional feature.

In the present disclosure, an expression "A or B", "at least one of A and/or B", "one or more of A and/or B", or the like, may include all possible combinations of items enumerated together. For example, an expression "A or B", "at least one of A and/or B", "one or more of A and/or B", or the like, may include all possible combinations of items enumerated together.

Expressions "first", "second" and the like, used in the present disclosure, may indicate various components regardless of the sequence and/or importance of the components. These expressions are used only to distinguish one component and another component from each other, and do not limit the corresponding components.

In case that any component (for example, a first component) is mentioned to be "(operatively or communicatively) coupled with/to" or "connected to" another component (for example, a second component), it is to be understood that any component is directly coupled to another component or coupled to another component through still another component (for example, a third component).

On the other hand, in case that any component (for example, the first component) is mentioned to be "directly coupled to" or "directly connected to" another component (for example, the second component), it is to be understood that still another component (for example, the third component) is not present between any component and another component.

An expression "configured (or set) to" used in the present disclosure may be replaced by an expression "suitable for", "having the capacity to", "designed to", "adapted to", "made to", or "capable of" based on a situation. The expression "configured (or set) to" may not necessarily indicate "specifically designed to" in hardware.

Instead, an expression "a device configured to" in any situation may indicate that the device may "perform~" together with another device or part. For example, "a processor configured (or set) to perform A, B and C" may indicate a dedicated processor (for example, an embedded processor) that may perform the corresponding operations or a generic-purpose processor (for example, a central processing unit (CPU) or an application processor) that may perform the corresponding operations by executing one or more software programs stored in a memory device.

In the embodiments, a "module" or a "~er/or" may perform at least one function or operation, and be implemented in hardware or software, or be implemented by a combination of hardware and software. In addition, a plurality of "modules" or a plurality of "~ers/ors" may be integrated with each other in at least one module and implemented by at least one processor except for a "module" or an "~er/or" that needs to be implemented in specific hardware.

Meanwhile, various elements and regions in the drawings are schematically shown. The disclosure is not limited by relative sizes or intervals shown in the accompanying drawings.

Hereinafter, the embodiments of the present disclosure are described in detail with reference to the accompanying drawings so that those skilled in the art to which the present disclosure pertains may easily practice the present disclosure.

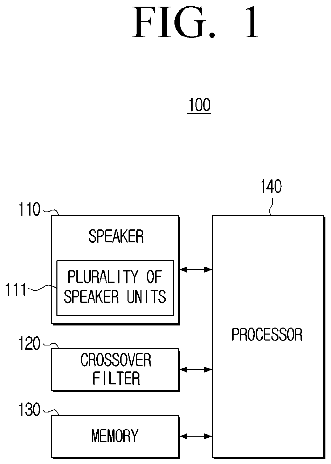

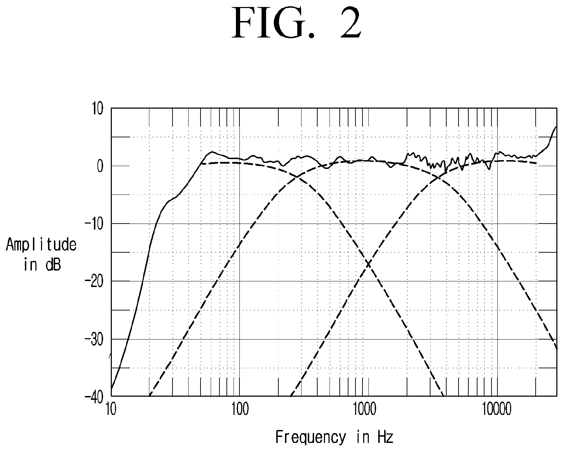

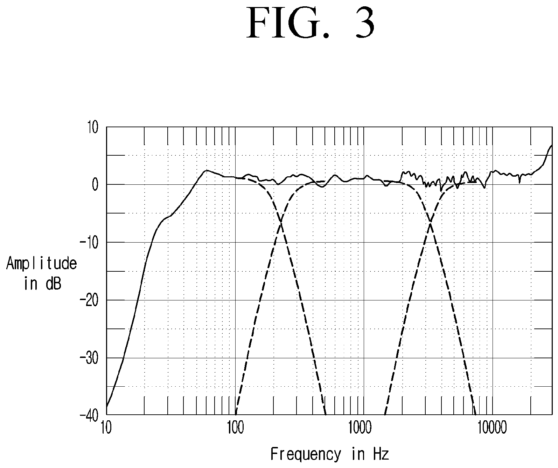

FIG. 1 is a block diagram schematically showing a configuration of an electronic device 100 according to an embodiment of the present disclosure; FIG. 2 is a diagram for explaining a slope of a first filter; and FIG. 3 is a diagram for explaining a slope of a second filter. Hereinafter, the description is provided with reference to FIGS. 1 to 3.

As shown in FIG. 1, an electronic device 100 according to the present disclosure includes a speaker 110, a memory 130, and a processor 140.

"The electronic device 100" refers to a device that is operable to control a crossover filter 120. For example, the electronic device 100 may be a speaker device 110, an audio output device 200, headphones, earphones, or the like. In addition, the electronic device 100 may be implemented in various types of devices such as a smartphone, a tablet personal computer "PC", and a television "TV". The type of electronic device 100 according to the present disclosure does not have any particular limitation.

"The speaker 110" refers to a configuration that is operable to output sound. In detail, the speaker 110 is operable to output music content. The speaker 110 includes a plurality of speaker units 111.

"The plurality of speaker units 111" refers to a configuration that is operable to output sound across a plurality of different frequency bands. Each individual speaker unit of the plurality of speaker units 111 may be implemented to suit a specific frequency band. The number of the plurality of speaker units 111 does not have any particular limitation.

Embodiments of the speaker 110 including the plurality of speaker units 111 may be referred to as a "multi-way speaker", and embodiments of the speaker 110 including specifically only two speaker units 111 may be referred to as a "2-way speaker". The meaning of "3-way speaker" is similarly understood to refer to a speaker 110 including specifically only three speaker units, and so on.

For example, in examples in which the speaker 110 is implemented as the 2-way speaker, the plurality of speaker units 111 includes a woofer that outputs sound in a low frequency band and a tweeter that outputs sound in a frequency band higher than the low frequency band output by the woofer. The low frequency band and the frequency band higher than the low frequency band may have some, or no degree of overlap. As another example, the speaker 110 is implemented as a 3-way speaker, with the plurality of speaker units 111 including a woofer that outputs the sound in the low frequency band; a mid-range unit that outputs the sound in a mid-range, which is a higher frequency band than the low frequency band output by the woofer; and the tweeter that outputs the sound in the high frequency band, which is a higher frequency band than the mid-range sound output by the mid-range unit. A speaker unit other than the above examples, such as a 2.5-way speaker or a 4-way speaker may also be provided. The "x.5" configuration refers to examples where one of the speaker units 111 outputs sounds across two ranges. As another example, the speaker 110 is implemented as a 2.5-way speaker, with three speaker units 111 may be provided: one woofer that outputs sound in the low frequency band; a tweeter that outputs sound in the high frequency band; and a further woofer which outputs sound in both the low frequency band and the mid-range.

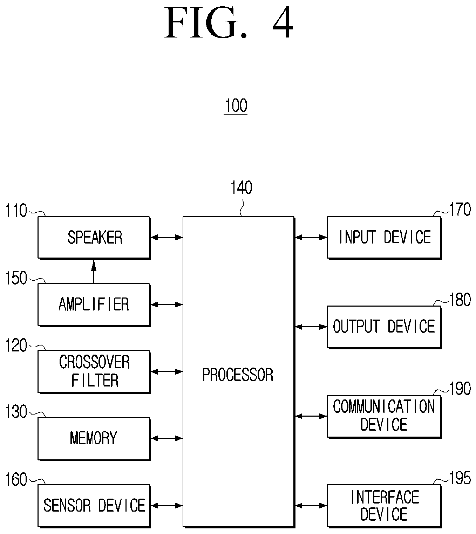

"The crossover filter 120" refers to a filter that separates an input audio signal into the plurality of different frequency bands. In detail, the crossover filter 120 is configured to filter an input audio signal of each of the plurality of frequency bands. The crossover filter 120 is characterized by crossover frequencies for the different frequency ranges, and the effect on the audio signal in the different frequency ranges based on the slope. The crossover filter 120 may be installed in an amplifier 150, such as in the example of FIG. 4, or may be included in the processor 140 in the form of a separate digital signal processor "DSP" block.

The crossover filter 120 may be implemented as a digital filter or an analog filter. In addition, the crossover filter may be implemented as various filters such as an infinite impulse response "IIR" filter and a finite impulse response "FIR" filter. The IIR filter refers to a filter whose output is calculated as a combination of a current input signal and a previous output signal and has theoretically an infinite impulse response, and refers to a filter whose output is calculated as a linear combination of the current input signal and several previous input signal values.

In the present disclosure, the "slope" of the crossover filter 120 refers to a parameter that indicates the filter's attenuation characteristics in a range where the audio signal of each of the plurality of frequency bands is filtered. In detail, the slope of the crossover filter 120 may indicate the rate at which the crossover filter 120 blocks a signal in the frequency band of a specific range. The term slope of the crossover filter 120 may be simply referred to as the "slope" and replaced by terms such as an "order", the "parameter", or a "factor".

The slope may be expressed as decibel (dB)/octave, decibel (dB)/decade, or the like. Here, "the octave" may refer to twice the frequency range, and "the decade" may refer to ten times the frequency range. For example, a first order high-pass filter or low-pass filter may have a slope of 6dB/octave, which may indicate that the signal is attenuated by 6dB per octave.

In case of having an adjusted slope, the crossover filter 120 may be operated as one of various filter types based on the adjusted slope. In detail, the crossover filter 120 having the slope of 6 dB/octave may be referred to as the "first order filter", and the crossover filter 120 having a slope of 12 dB/octave may be referred to as a "second order filter". Further, the crossover filter 120, which has a slope of 6n dB/octave (where, n is a natural number), may be referred to as an "n-th order filter". Meanwhile, in the present disclosure, the term "adjust" may be replaced by terms such as "transform", "change/alter", "modulate", or the like.

FIG. 2 shows a slope, a dotted line in FIG. 2, of the crossover filter 120 when the crossover filter 120 of the 3-way speaker is operated as the first order filter; and FIG. 3 shows a slope, a dotted line in FIG. 3, of the crossover filter 120 when the crossover filter 120 is operated as a fourth order filter.

As shown in FIG. 2, the crossover filter 120 may block the signal at a reduced rate near a frequency break point in case of gently adjusting the slope of the crossover filter 120 to correspond to characteristics of the first order filter. In detail, in this configuration the crossover filter 120 may mix the signals in a crossover band while correspondingly minimizing group delay near the frequency break point. Therefore, in this case, the frequency band corresponding to each of the plurality of speaker units 111 is gradually changed. Therefore, relatively more overlap between signal output from the crossover filter 120 to the individual speaker units 111 in the plurality of speaker units 111 may occur as compared to a case where the slope is steeper.

In case of gently adjusting the slope of the crossover filter 120 to correspond to the first order filter, a lot of overlap between the signal output from the crossover filter 120 to the individual speaker units 111 in the plurality of speaker units 111 may occur meaning an expressive power of the music content having an emphasized transient feature is excellent, but this may be disadvantageous in terms of vertical/horizontal directivity.

On the other hand, as shown in FIG. 3, the crossover filter 120 may block the signal near the frequency break point at a relatively higher rate, such as in case of steeply adjusting the slope of the crossover filter 120 to correspond to characteristics of the fourth order filter. In detail, the crossover filter 120 may minimize the mixing of the signals with each other near the frequency break point, that is, the crossover band, compared to the first order filter. Therefore, in this case, the frequency band corresponding to each of the plurality of speaker units 111 may be clearly distinguished, thus reducing the overlap between signal output from the crossover filter 120 to the plurality of speaker units 111.

In case of steeply adjusting the slope of the crossover filter 120 to correspond to the characteristic of a fourth order filter, the overlap between the signal output from the crossover filter 120 to the individual speaker units 111 in the plurality of speaker units 111 may be minimized, which may thus be relatively superior to the first order filter in terms of uniformity of vertical/horizontal directivity. On the other hand, in this case, more group delay may occur compared to the first order filter due to the steeper slopes, which is disadvantageous in terms of accurate time zone alignment between units. The more accurate the time alignment is in a wide frequency range, the closer the music content may be to the sound perceived by a listener to an actual performance. Therefore, with the crossover filter 120 configured with characteristics of a fourth order filter, the expressive power of the music content having emphasized transient features may be relatively disadvantageous, as compared to the case when the crossover filter 120 is configured with characteristics of a first order filter.

The description above compares and describes examples with the crossover filter 120 configured with characteristics of a first order filter and a fourth order filter for convenience of explanation; the respective features of the first order filter and the fourth order filter and their differences, described above, may be applied similarly to a crossover filter 120 having lower slope and higher slope characteristics

Meanwhile, in the present disclosure, adjusting the slope of the crossover filter 120 to correspond to the n-th order filter may indicate adjusting the slope of the crossover filter 120 for a resulting sound, output through the crossover filter 120 and the speaker 110 including the plurality of speaker units 111, to be acoustically n-th order rather than indicating that the slope of the crossover filter 120 itself is adjusted to an n-th order.

The memory 130 may store at least one instruction related to the electronic device 100. In addition, the memory 130 may store an operating system "O/S" for driving the electronic device 100. In addition, the memory 130 may store various software programs or applications for operating the electronic device 100 according to the various embodiments of the present disclosure. The memory 130 may include a semiconductor memory such as a flash memory, or a magnetic storing medium such as a hard disk.

In detail, the memory 130 may store various software modules for operating the electronic device 100 according to the various embodiments of the present disclosure, and the processor 140 may allow the various software modules stored in the memory 130 to be executed to control an operation of the electronic device 100. That is, the memory 130 may be accessed by the processor 140, and the processor 140 may perform readout, recording, correction, deletion, update and the like of data therein.

Meanwhile, in the present disclosure, the term "memory 130" may include the memory 130, a read only memory (ROM) or a random access memory (RAM), disposed in the processor 140, or a memory card (for example, a micro secure digital (SD) card or a memory stick) mounted at the electronic device 100.

In particular, in one or more embodiments, the memory 130 can store data formusic content. Here, music content may be stored in the form of digitally encoded samples, and data for the music content may further include metadata for the music content. That is, the data for music content may comprise both data which can be decoded into a form suitable for listening to, and metadata that is descriptive of, or otherwise relevant to the listenable content itself.

In addition, the memory 130 may store various information such as information corresponding to one or more parameters including the slope of the crossover filter 120, information for identifying one or more property of the music content, information for classifying the property of the music content, information for relating the slope to be used for a corresponding property of the music content, information for a user listening height, information for a user location, and information for guiding selection or operation of a type of filter corresponding to the adjusted slope.

In addition, the memory 130 may store various pieces of information necessary to achieve the purpose of the present disclosure, and the information stored in the memory 130 may be updated as the information is received from an external device or input by a user.

The processor 140 may control overall operations of the electronic device 100. In detail, the processor 140 is connected to the components of the electronic device 100 including the speaker 110, the memory 130, and is configured in this example to control the overall operations of the electronic device 100 by executing at least one instruction stored in the memory 130 as described above.

The processor 140 may be implemented in various ways. For example, the processor 140 may be implemented as at least one of an application specific integrated circuit "ASIC", an embedded processor, a microprocessor, hardware control logic, a hardware finite state machine "FSM", or a digital signal processor "DSP". Meanwhile, in the present disclosure, the term "processor 140" may be used to include a central processing unit "CPU", a graphic processing unit "GPU", a micro processor unit "MPU", or the like.

The processor 140 is configured to perform various operations such as processing the audio signal corresponding to the music content, acquiring a control signal to control the operations of the plurality of speaker units 111, the crossover filter 120, and the like, and adjusting a frequency response to the audio signal.

The processor 140 is configured to adjust the slope in the range where the crossover filter 120 filters the audio signal of each of the plurality of frequency bands based on at least one of the property of the music content or a user taste for sound.

In particular, the processor 140 is configured to output the music content with an adjustment to the slope of the crossover filter 120 based on the property of the music content, and/or may also output the music content with an adjustment to the slope of the crossover filter 120 based on a user sound preference setting, such as determined from a user input for selecting the user's taste for sound. The description below first describes an embodiment of outputting the music content that includes adjusting the slope of the crossover filter 120 based on at least one property of the music content.

In one or more embodiments, the processor 140 may adjust the slope of the crossover filter 120 based on a property of the music content.

In the present disclosure, the processor 140 may classify the "property of the music content" by determining whether it is appropriate for each music content to be provided to the user using a certain order filter, which corresponds to setting the slope of the crossover filter 120.

As an example, the processor 140 may classify a property of the music content based on whether the content includes transient features of a predetermined threshold level or above. "Transient features" is a description that refers to a portion of the audio signal corresponding to the music content is changed rapidly. For example, the transient features may correspond to a rapid change in sound produced by a percussion instrument when the percussion instrument is struck, or a change in sound at the beginning or end of a contribution of a particular instrument.

For example, the music content may have, as an important feature, an expressive power of a beat based on the pressing time and intensity of an instrument key and have emphasized transient features, as in case of a piano solo piece. In this case, the processor 140 may use the first order filter to provide the user with music content having a superior expressive power and greater coherence. On the other hand, the processor 140 may use the fourth order filter in case that the music content has continuous sounds as an important issue as in case of an orchestral concerto.

In addition to the transient feature, the processor 140 may determine whether it is appropriate for each music content to be provided to the user using the certain order filter, considering the slope of the crossover filter 120, on the basis of various references.

The processor 140 may identify at least one property of the music content based on the metadata for the music content. In detail, the processor 140 may identify a property of the music content based on the metadata for the music content in response to receiving a request to reproduce the music content. In addition, or alternatively, the processor 140 may identify a property of the music content based on the metadata for the music content before receiving a request to reproduce the music content, and then adjust the slope of the crossover filter 120 using the identified property of the music content on receipt of the request to reproduce the music content.

The processor 140 may identify a property of the music content based on at least one of a music content genre, a music content performer, or an instrument type used in the music content, such being examples of types of data included in the metadata for the music content. The processor 140 may also use various other information included in the metadata to identify one or more properties of the music content.

Furthermore, the processor 140 may identify a property of the music content by inputting the metadata into a neural network model trained to output information such as classification of properties of the music content. In detail, the neural network model may be trained to classify one or more properties of the music content corresponding to the information included in the input metadata and output the information for a property of the music content. The processor 140 may identify a property of the music content by using the trained neural network model.

The processor 140 may adjust the slope of the crossover filter 120 to correspond to a predefined type of filter, based on one or more property of the music content.

For example, the processor 140 may adjust the slope to correspond to the first filter in case that the property of the music content is a first property that includes transient features at a predetermined threshold level or above. The processor 140 may adjust the slope to correspond to the second filter, the second filter having a slope greater than the slope of the first filter, in case that the property of the music content is a second property that includes transient features below the threshold level. In this example, the first filter may be the first order filter which is a filter having a gentle slope compared to the second filter, and the second filter may be the fourth order filter which is a filter having the steep slope compared to the first filter.

In one or more embodiments, the processor 140 may alternatively, or in addition, adjust the slope of the crossover filter 120 based on the user taste for sound, for example a user taste for sound determined according to a user's sound preference setting .

In detail, the processor 140 may acquire information on a user's taste by receiving the user input for selecting a setting corresponding to the user taste for sound, such input received through an input device 170 of the electronic device 100. Additionally, or alternatively, the processor 140 may receive information on a user's taste by receiving the user input for selecting a setting corresponding to the user taste for sound from an external device through a communication device 190 of the electronic device 100.

Here, "the user('s) taste" refers to information on whether the user prefers music content to be reproduced with a certain order filter used, and thus a certain slope of the crossover filter 120. For example, the user may prefer music content to be provided using a first order filter, due to the gentle slope of the crossover filter 120 in case that the music content emphasizes the transient feature (e.g., piano solo, drum solo, or percussion instrument performance), or may prefer the music content provided using the crossover filter 120 configured as a fourth order filter in case that the user prefers to listen to a stable soundstage (where stronger vertical and horizontal directivity is advantageous).

In one or more embodiments, the processor 140 may adjust the slope of the crossover filter 120 by using both the information on the property of the music content and the information on the user taste.

The processor 140 may give priority to the user taste regardless of the property of the music content, and may adjust the slope of the crossover filter 120 to correspond to the user taste. In some cases, the crossover filter 120 may be initially released to have the fourth-order slope in an initial shipping mode of the electronic device, and the user may then change the fourth-order slope to the user's desired setting after purchasing the electronic device. Thereafter the user's desired setting may become the default setting, and the device 100 provide the crossover filter 120 to operate continuously using the changed setting.

On the other hand, even through a user generally prefers the music content to be provided using the fourth order filter, the user may be provided with the music content using the first order filter in case that the music content emphasizes the transient feature such as a piano solo. Therefore, the processor 140 may give priority to the property of the music content regardless of the user taste, and may adjust the slope of the crossover filter 120 to correspond to the property of the music content. In such examples, the user taste is subordinate to the property of the music content in determining the characteristic of the crossover filter 120.

Meanwhile, the processor 140 may assign a weight to each of the information for the user taste and the property of the music content, calculate score information based on a weighted sum of the information for the user taste and the property of the music content, and also adjust the slope of the crossover filter 120 based on the calculated score information.

The processor 140 may control the crossover filter 120 to filter the audio signal corresponding to the music content based on the adjusted slope while the music content is output as audio through the speaker 110. That is, the adjustment of the slope may occur simultaneously with ongoing output of audio from the speaker 110.

In detail, the processor 140 may transmit, to the crossover filter 120, the control signal for adjusting the slope of the crossover filter 120 to a slope corresponding to at least one of the property of the music content or the user taste. In addition, the speaker 110 may use the crossover filter 120 to thus filter the audio signal corresponding to the music content based on the adjusted slope, and then output the music content through the plurality of speaker units 111.

The description above relates to an embodiment in which identifying the property of the music content based on metadata for the music content. However, in one or more embodiments, the processor 140 may identify the property of the music content based on a pattern of the audio signal corresponding to the music content.

In detail, the processor 140 in such examples is configured to identify the property of the music content based on whether the pattern of the audio signal corresponding to the music content is impulsive. For example, the audio signal corresponding to the music content may include a pattern of impulses, referred to as an "impulsive signal". An "impulsive signal" may include sudden high energy impulse or impulse, and may thus appear as a signal having a high frequency component in a frequency domain, and moreover may be characterized by rapid changes in the time domain.

In addition, the processor 140 may use continuity of the audio signal and whether the audio signal includes a pattern of a predefined type in a process of identifying the property of the music content based on the pattern of the audio signal.

In particular, the processor 140 may identify the property of the music content for each section in the music content based on the pattern of the audio signal corresponding to the music content while the music content is output through the speaker 110. In other words, the processor 140 may analyze the property of the music content in real time while outputting the music content as an audio signal, and particularly identify the property of the music content for each section, in particular each time section, included in the music content.

The processor 140 may adjust the slope for each section based on the property of the music content identified for each section in case of identifying the property of the music content for each section, and control the crossover filter 120 to filter the audio signal corresponding to the music content based on the slope adjusted for each section during reproduction of the audio signal, one section to the next.

For example, the processor 140 may analyze the music content of a second section following a first section while outputting the music content of the first section, and based on an analysis result, the processor 140 may control the crossover filter 120 to filter the audio signal corresponding to the music content of the second section based on the slope corresponding to the first order filter. In addition, the processor 140 may analyze the music content of a third section following the second section while outputting the music content of the second section, and based on an analysis result, the processor 140 may control the crossover filter 120 to filter the audio signal corresponding to the music content of the third section based on the slope corresponding to the fourth order filter.

Considering sections, while reproducing the music content, the processor 140 may control the crossover filter based on the pattern of the audio signal to filter the music content by adjusting the slope based on the average property of the entire section, rather than based on the instantaneous property of the music content within each section.

According to one or more embodiments described above with reference to FIGS. 1 to 3, the electronic device 100 may control the slope of the crossover filter 120 based on a property of the music content, thereby providing the user with optimal reproduction of the music content by matching the property of the music content. In other words, the electronic device 100 may automatically provide an optimal crossover setting based on the metadata for the music content using a speaker 110, thereby maximizing advantages of a crossover design for the speaker 110. That is, the operation above is advantageous when reproducing music content on only one speaker 110 that comprises a plurality of speaker units 111, such when the music content is reproduced in mono audio formatP.

In addition, the electronic device 100 may control the slope of the crossover filter 120 in consideration of the user taste, thereby providing the user with the optimal music content that matches the user taste.

FIG. 4 is a block diagram showing a specific configuration of the electronic device 100 according an embodiment of the present disclosure.

As shown in FIG. 4, the example embodiment of the electronic device 100 further includes separate functional blocks for the amplifier 150, a sensor device 160, the input device 170, an output device 180, the communication device 190, and an interface device 195 in addition to the speaker 110, the crossover filter 120, the memory 130, and the processor 140. However, the selection of components and separation of functional blocks shown in FIGS. 1 and 4 are only examples. A new component may be added to the components shown or some components may be omitted to practice the present disclosure.

The amplifier 150 is configured to amplify the audio signal. In detail, the amplifier 150 may amplify a magnitude of the audio signal corresponding to the music content, adjust a dynamic range that occurs in the music content, or perform an operation such as calibrating the frequency response.

In particular, in one or more embodiments, the processor 140 may transmit the audio signal corresponding to the music content to the amplifier 150 to thus cause the signal amplified by the amplifier 150 to be output through the speaker 110. The electronic device 100 according to the present disclosure may be an active speaker device including the amplifier 150 and the speaker 110, and is not limited thereto.

The sensor device 160 may include at least one sensor component, element or sensor modaility, and may detect various information inside and outside the electronic device 100. In detail, the sensor device 160 may include at least one of an image sensor, an infrared sensor, a global positioning system "GPS" sensor, a gyro sensor (or gyroscope), an acceleration sensor (or accelerometer), a light detection and ranging "LiDAR" sensor, an inertial measurement unit "IMU", or a motion sensor.

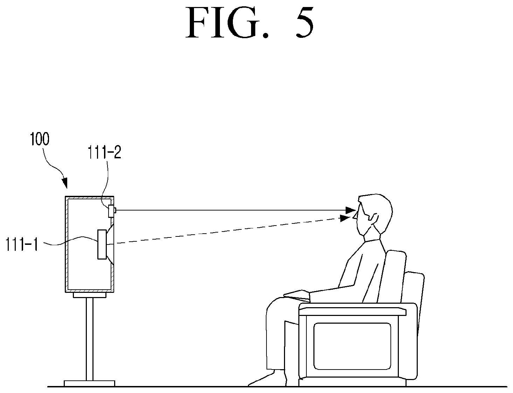

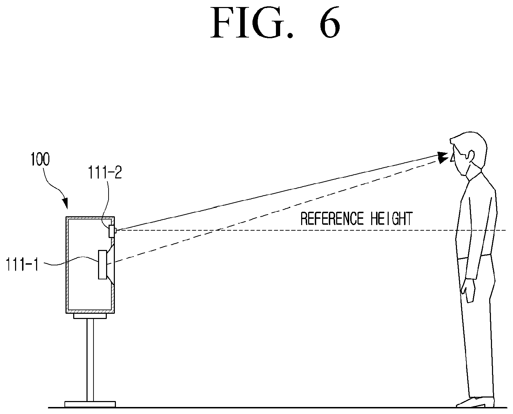

In particular, in one or more embodiments, the processor 140 may acquire information for the user listening height through the sensor device 160, and control the speaker 110 to output the music content by compensating for delay caused by a difference between the listening height and a reference height in case that the difference between the user listening height and the predetermined reference height is a threshold value or more. This embodiment is described in more detail with reference to FIGS. 5 and 6.

The input device 170 may include an electronic circuit, and the processor 140 may be configured to receive a user command for controlling the operation of the electronic device 100 through the input device 170. In detail, the input device 170 may include a component such as a microphone, a camera, or a remote control signal receiver. In addition, the input device 170 may be implemented as a touch screen included in a display. In particular, the microphone may receive a voice signal and convert the received voice signal into an electrical signal.

In particular, in one or more embodiments, the processor 140 may receive the user input for selecting the user taste for sound through the input device 170, thereby acquiring the information for the user taste. In addition, the processor 140 may adjust the slope of the crossover filter 120 based on at least one of the user taste or the property of the music content in case of receiving the user input for selecting the user taste for sound through the input device 170.

Meanwhile, in one or more embodiments, the processor 140 may acquire the information for at least one user location through the sensor device 160, and may also adjust the slope to correspond to a third filter having a slope higher than the second filter in case of identifying that at least one user location is outside a predetermined threshold range based on the information for the user location. The reason is that a phase mismatch, leading to so-called out-of phase phenomena, may occur as a transmission distance between each speaker unit 111 of the listener that is outside the threshold range is changed, which may cause a dip in a frequency feature. This embodiment is described in more detail with reference to FIG. 5 and 6.

The output device 180 may include an electronic circuit, and the processor 140 may output various functions that the electronic device 100 may perform through the output device 180. In addition, the output device 180 may include at least one of the display or an indicator.

The display is configured to output image data under control of the processor 140. In detail, the display may output an image pre-stored in the memory 130 under the control of the processor 140. In particular, the display according to an embodiment of the present disclosure may also display a user interface stored in the memory 130. The display may be implemented as a liquid crystal display panel "LCD", an organic light emitting diode "OLED" or the like, and the display may be implemented as a flexible display, a transparent display, or the like in some cases. However, the display in the present disclosure is not limited to a particular type.

The indicator may be lit under the control of the processor 140. In detail, the indicator may be lit up in various colors under the control of the processor 140. For example, the indicator may be implemented as a light emitting diode "LED", a liquid crystal display "LCD" panel, a vacuum fluorescent display "VFD", and is not limited thereto.

In particular, in one or more embodiments, the processor 140 may control the output device 180 to output the information for guiding selection of the type of filter, such as the filter corresponding to the adjusted slope, while the music content is output through the speaker 110.

For example, the processor 140 may control the output device 180 to output information indicating that the music content is being output using the first order filter in case that the type of filter corresponding to the adjusted slope is the first order filter. In addition, the processor 140 may control the output device 180 to output information in real time for showing the setting of the crossover filter 120, which is changed for each section in one music content.

The information for guiding selection of the type of filter corresponding to the adjusted slope may be provided in a form of the user interface that includes text and/or image through the display, or also be provided by indicating a specific color through the indicator.

The communication device 190 may include an electronic circuit, and communicate with an external device. In detail, the processor 140 may receive various data or information from an external device connected thereto through the communication device 190, and transmit the various data or information to the external device.

The communication device 190 may include at least one of a wireless fidelity "WiFi" module, a Bluetooth module, a wireless communication module, a near field communication "NFC" module, or an ultra wide band "UWB" module. In detail, the WiFi module and the Bluetooth module may respectively perform the communication by using a WiFi method and a Bluetooth method. In case of using the WiFi module or the Bluetooth module, the communication device 190 may first transmit and receive various connection information such as a service set identifier "SSID", connect the communication by using this connection information, and then transmit and receive the various information.

In addition, the wireless communication module may perform the communication based on various communication protocols such as institute of electrical and electronics engineers "IEEE", Zigbee, 3rd generation "3G"), 3rd generation partnership project "3GPP", long term evolution "LTE", and 5th Generation "5G". In addition, the NFC module may perform the communication by using an NFC method that uses a 13.56 MHz band among various radio frequency identification "RF-ID" frequency bands such as 135 kHz, 13.56 MHz, 433 MHz, 860 to 960 MHz, and 2.45 GHz. In addition, the UWB module may accurately measure time of arrival "ToA", which is time at which a pulse reaches a target, and an angel of arrival "AoA", which is the angle of arrival of a pulse at a transmission device, through the communication between UWB antennas, and may thus perform accurate distance and location recognition within an error range of several tens of centimeters indoors.

In particular, in one or more embodiments, the processor 140 may receive various information, such as the music content, the information for the music content, the information for identifying the property of the music content, the information for classifying the property of the music content, from the external device through the communication device 190. In addition, the processor 140 may receive the information for the user taste from the external device through the communication device 190. Some of all of such information may be received in response to a request for the same, send by the processor 140 through the communication device 190, to the external device, and received by the external device.

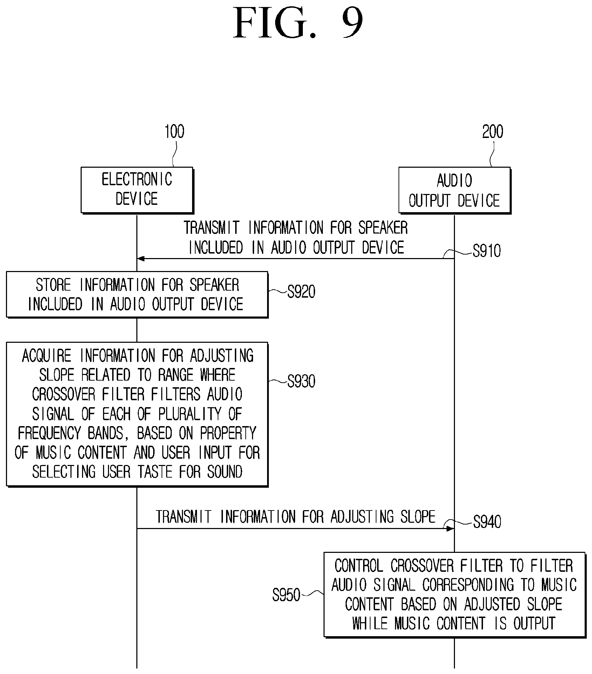

In addition, the processor 140 may also control the communication device 190 to transmit information for the slope of the crossover filter 120 that is adjusted based on at least one of the audio signal corresponding to the music content, the property of the music content or the user taste, or the like to the external device, that is, the audio output device 200 for the music content to be output by the external device. An embodiment related to the audio output device 200 is described in more detail with reference to FIG. 9.

The interface device 195 may transmit and receive video data and/or audio data in cooperation with the external device. In detail, the interface device 195 may include an input port which may receive the video data and/or the audio data from the external device, and an output port which may transmit the video data and/or the audio data to the external device. In particular, in case that the interface device 195 may transmit and receive both the video data and the audio data, the input/output port which may transmit and receive the video data and the audio data may be separately implemented. The interface device 195 may connect the electronic device 100 and the external device to each other in a wired manner through a cable, or may also connect the electronic device 100 and the external device to each other in a wireless manner.

For example, the interface device 195 may include a high-definition multimedia interface "HDMI" module, a universal serial bus "USB" module, or the like. The HDMI module is one of uncompressed digital video/audio interface standards, and may provide an interface between the electronic device 100 and the external device that provides the content. The USB module may provide a communication system between the electronic device 100 and the external device that provides the content by using predefined input and output standard protocols. In addition to the HDMI module and USB module, the interface device 195 may be implemented as various modules for providing input and output of the video/audio data between the electronic device 100 and the external device, such as a display port "DP" module, a red-green-blue "RGB" module, a digital visual interface "DVI" module, and a thunderbolt module.

In various embodiments according to the present disclosure, in case that the electronic device 100 and the external device are connected to each other through the interface device 195, the processor 140 may identify that an event occurs identifying a subscription service that the user of the electronic device 100 is subscribed to and is accessing, and confirm the identity of the subscription service that the user is subscribing. In addition, the processor 140 may receive an image signal corresponding to at least one channel through the interface device 195 in case that a channel for providing content through the display is switched to at least one channel among a plurality of channels, corresponding to a difference in channel configurations between the plurality of subscription services.

In addition, the interface device 195 may transmit and receive the various information/data, including the control signal between the electronic device 100 and the external device in the various embodiments according to the present disclosure.

In particular, in one or more embodiments, the processor 140 may receive the audio signal corresponding to the music content from the external device through the interface device 195, and control the interface device 195 to transmit the audio signal corresponding to the music content to the external device.

FIGS. 5 and 6 are diagrams for specifically explaining an embodiment related to controlling the speaker 110 based on user listening height.

In such embodiments, the processor 140 may acquire the information corresponding to and/or confirming the user listening height through the sensor device 160. In detail, the sensor device 160 may include an image sensor, e.g. a vision sensor or camera, infrared sensor, acoustic sensor, or LiDAR sensor. Such sensors may be as described in the earlier examples above. The processor 140 may acquire the information for the user's listening height by identifying a location of user ears through the sensor device 160 and calculating a distance between the user ears and a floor of a space where the user is located. That is, "user listening height" refers to the distance between the user ears and the floor.

For example, in case of acquiring the information for the user listening height by using the image sensor, the processor 140 may identify the user ears and the floor of the space where the user is located by acquiring an image of the space where the user is located through the image sensor, and inputting the acquired image into the neural network model trained for object recognition. In addition, the processor 140 may acquire the information for the user listening height by calculating the distance between the user ears and the floor in the space where the user is located.

In case of acquiring the information for the user listening height, the processor 140 may identify whether the difference between the user listening height and the reference height is a threshold value or more. Here, "the reference height" refers to a height that functions as a reference for use in a process of adjusting the delay, or phase mismatch, between the plurality of speaker units 111, and may be changed based on the user or developer's setting. The reference height therefore may be a predetermined height value.

As shown in FIG. 5, the processor 140 may set the distance between the floor and the user's ears to the reference height, e.g., 90cm, in case that the user sits at a specific location in front of the electronic device 100. In addition, in case that the distance between the floor and the user's ears matches the reference height or is less than the threshold value, the processor 140 may identify time required for the sound output through a woofer 111-1 and the sound output through a tweeter 111-2 to reach the user's ears to be comparable to, or of the same level as the tuning delay between the output of the plurality of speaker units 111. The tuning delay is the delay used for tuning the speaker 110 so for equivalent phase characteristics at the output of the woofer 111-1 and the tweeter 111-2. The processor 140 may determine this height as a general listening condition and use the crossover slope focusing on a sound quality, such as of the first or fourth-order slope.

On the other hand, as shown in FIG. 6, the processor 140 may select the crossover of a very steep slope to provide a stable frequency feature to the majority, that is, to exclude a dip phenomenon caused by the phase mismatch between the plurality of speaker units 111 in case that the distance, between the user's ears and the floor of the space where the user is located is higher than the reference height. Problems of this nature may occur when the distance between the user's ears and the floor of the space where the user is located is e.g. 160cm, or may be perceived particularly in case that the listening heights of a plurality of listeners are different from each other. The reason is that, assuming that the reference height is 90cm, a probability of the poor phase match between the woofer 111-1 and the tweeter 111-2 may be increased as described above if the time for the sound output through the woofer 111-1 and the sound output through the tweeter 111-2 to reach the user ears is excessively different from each other.

Therefore, in case that the difference between the user listening height and the reference height is the threshold value or more, the processor 140 may control the speaker 110 to output the music content by compensating for the delay that occurs based on the difference between the listening height and the reference height. Accordingly, as shown in FIG. 6, the processor 140 may adjust, so as to be comparable to an ideal listening height level, the difference in the time for the sound output through the woofer 111-1 and the sound output through the tweeter 111-2 to reach the user ears. This occurs even though the distance between the user ears and the floor of the space where the user is located is higher than the reference height. The processor 140 may determine the threshold value in the form of an absolute value, and adjust the time difference not only in a situation where the user listening height is higher than the reference height, such as when the listener stands up, but also in a situation where the user listening height is lower than the reference height, such as when the listener sits on the floor.

According to one or more embodiments described above with reference to FIGS. 5 and 6, the electronic device 100 may provide the music content with the optimal frequency characteristics for the crossover filter even through the user listening height is changed. Accordingly, the electronic device 100 may solve the phase mismatch which may easily occur between the plurality of speaker units 111 as the user listening height is changed particularly in case that the crossover filter 120 is operated as a low-order filter such as the first order filter.

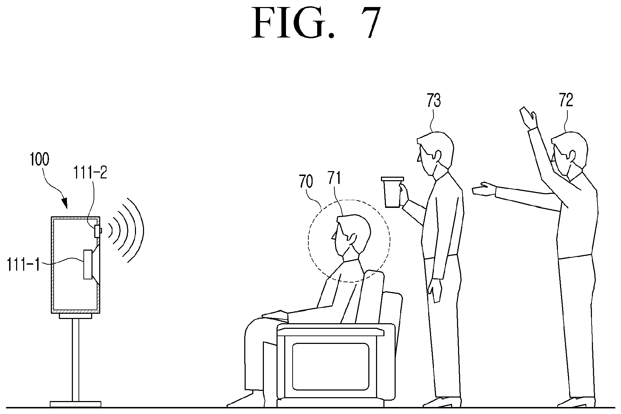

FIG. 7 is a diagram for specifically explaining an embodiment related to controlling the speaker 110 based on the user location.

In one or more embodiments, the processor 140 may acquire the information for at least one user listening height through the sensor device 160. In detail, the sensor device 160 may include the image sensor, e.g. avision sensor or camera, infrared sensor, acoustic sensor, or LiDAR sensor. Such sensors may be as described in the earlier examples above. The processor 140 may acquire information for where at least one user is located through the sensor device 160.

For example, in case of acquiring the information for at least one user location by using the LiDAR sensor, the processor 140 may identify a distance between the LiDAR sensor and at least one user and a direction in which the user is located relative to the LiDAR sensor. This is performed by emitting a laser from the LiDAR sensor and detecting the laser reflected by at least one user. In addition, the processor 140 may acquire the information for at least one user location based on the distance between the LiDAR sensor and at least one user and the direction in which the user is located relative to the LiDAR sensor.

The processor 140 may identify whether at least one user location is outside the predetermined threshold range based on the information for at least one user location in case of acquiring the information for at least one user location. FIG. 7 shows the predetermined threshold range as region 70.

Here, "the threshold range" refers to a three dimensional spatial range corresponding to a good position for the user to enjoy the sound output through the plurality of speaker units 111, and may also be referred to as a so-called sweet spot. The threshold range 70 may vary according to the slope characteristics of the crossover filter 120. In detail, the threshold range 70 may be wider in case that the crossover filter 120 is operated as the fourth order filter compared to the case where the crossover filter 120 is operated as the first order filter. Likewise, the higher the order of the crossover filter 120, the wider the threshold range 70 may be.

The processor 140 may adjust the slope of the crossover filter 120 to correspond to a third filter, which has a higher slope than a second filter, in case of identifying that at least one user location is outside the predetermined threshold range 70. Here, the second filter may be the filter having a relatively gentle slope compared to the third filter and may be, for example, the fourth order filter, and the third filter may be the filter having a steep slope compared to the second filter and may be, for example, a 16th order filter. That is, the slope of the third filter may be 96 dB/octave.

For example, in case that the crossover filter 120 is operated as the fourth order filter to give the threshold range 70 of FIG. 7, a location of a first user 71 is within the threshold range 70 while locations of a second user 72 and a third user 73 are outside the threshold range 70. Therefore, the processor 140 is configured to adjust the slope of the crossover filter 120 to correspond to the 16th order filter, as an example having a higher slope than the fourth order filter. This embodiment may be particularly applied to a situation where a timbre, that is range of characteristic frequencies in the audio signal is not changed as much as possible, even though people move and the listening height is changed. Such a situation may arise where the people gather and have music at a party.

Meanwhile, in case of identifying that all the user locations are within the threshold range 70, the processor 140 may control the crossover filter 120 based on a predetermined slope, or the slope adjusted based on the property of the music content and/or the user taste, instead of adjusting the slope of the crossover filter 120 to extend the sweet spot.

According to one or more embodiments described above with reference to FIG. 7, the electronic device 100 may minimize deterioration of the frequency components in the crossover band depending on the listening position by adjusting the slope of the crossover filter 120 to the very steep slope particularly in case that the plurality of users are located over a wide range, or one or more users is outside the sweet spot / optimal listening location.

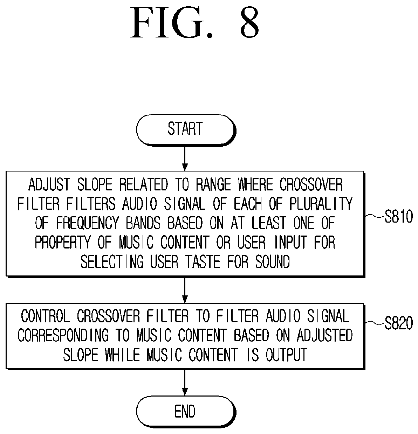

FIG. 8 is a flowchart showing a controlling method of an electronic device 100 according to one or more embodiments of the present disclosure.

As shown in FIG. 8, the electronic device 100 is configured to adjust the slope related to the range where the crossover filter 120 filters the audio signal of each of the plurality of frequency bands based on at least one of the property of the music content or the user taste for sound (S810).

In detail, the electronic device 100 may adjust the slope of the crossover filter 120 based on the property of the music content, and may also adjust the slope of the crossover filter 120 based on the user taste. In addition, the electronic device 100 may adjust the slope of the crossover filter 120 by using both the information for the property of the music content and the information for the user taste.

The electronic device 100 is configured to control the crossover filter 120 to filter the audio signal corresponding to the music content based on the adjusted slope while the music content is output in case that the slope of the crossover filter 120 is adjusted (S820).

In detail, the electronic device 100 may transmit, to the crossover filter 120, the control signal for adjusting the slope of the crossover filter 120 to the slope corresponding to at least one of the property of the music content or the user taste. In addition, the speaker 110 may use the crossover filter 120 to thus filter the audio signal corresponding to the music content based on the adjusted slope, and then output the music content through the plurality of speaker units 111.

Meanwhile, the controlling method of an electronic device 100 according to the embodiment described above may be implemented as a program and provided to the electronic device 100. In particular, the program including the controlling method of an electronic device 100 may be stored and provided in a non-transitory computer readable medium. The program may comprise instructions which when executed by the processor cause the electronic device to perform the method.

In detail, in the non-transitory computer readable recording medium including a program for executing the controlling method of an electronic device 100, the controlling method of an electronic device 100 may include: adjusting the slope related to the range where the crossover filter 120, included in the speaker 110 and separating the input audio signal into the plurality of different frequency bands, filters the audio signal of each of the plurality of frequency bands, based on at least one of the property of the music content or the user taste for sound; and controlling the crossover filter 120 to filter the audio signal corresponding to the music content based on the adjusted slope while the music content is output, based on at least one of the property of the music content or the user taste for sound.

The description above briefly describes the controlling method of an electronic device 100 and the computer readable recording medium including the program for executing the controlling method of an electronic device 100. However, this description is provided only for omitting a redundant description, and the various embodiments of the electronic device 100 may also be applied to the controlling method of an electronic device 100 and the computer readable recording medium including the program for executing the controlling method of an electronic device 100.

FIG. 9 is a sequence diagram showing operations of the electronic device 100 and the audio output device 200 according to one or more embodiments of the present disclosure.

The description above describes the various embodiments on the premise that the electronic device 100 includes the speaker 110, the memory 130, and the processor 140, and the present disclosure is not limited thereto. For example, some of the operations according to the various embodiments described above may be performed by the electronic device 100, and other operations may be performed by the audio output device 200. That is, the various embodiments according to the present disclosure may be implemented by a system including the electronic device 100 and the audio output device 200.

"The audio output device 200" refers to a device that includes the speaker 110 and is configured to output the audio. In particular, the speaker 110 of the audio output device 200 may include the plurality of speaker units 111 according to the present disclosure. In addition, the audio output device 200 may include the crossover filter 120 and the amplifier 150. For example, the audio output device 200 may be a Bluetooth speaker, earphone, headphone, or the like, and a type of the audio output device 200 does not have any particular limitation.

Meanwhile, in the embodiment described with reference to FIG. 9, the electronic device 100 may not include the speaker. For example, the electronic device 100 may be implemented as a server or an edge computing device.

As shown in FIG. 9, the audio output device 200 may transmit, to the electronic device 100, information for the speaker 110 included in the audio output device 200 (S910), and the electronic device 100 may store the information for the speaker 110 included in the audio output device 200 (S920).

Here, the "information for the speaker 110 included in the audio output device 200" may include various information for the speaker 110 included in the audio output device 200, the plurality of speaker units 111 included in the speaker 110 and the crossover filter 120,. That is, the electronic device 100 may acquire the information for the speaker 110 included in the audio output device 200 before performing the operation related to adjusting the slope of the crossover filter 120, and then store the same in the memory 130 of the electronic device 100.

The electronic device 100 may acquire information for adjusting the slope related to the range where the crossover filter 120 filters the audio signal of each of the plurality of frequency bands, based on at least one of the property of the music content and/or the user taste for sound (S930).

The electronic device 100 may transmit the information for adjusting the slope to the audio output device 200 in case of acquiring the information for adjusting the slope (S940). In addition, the audio output device 200 may control the crossover filter 120 to filter the audio signal corresponding to the music content based on the adjusted slope while the music content is output in case of receiving the information for the adjusted slope (S950).

According to one or more embodiments described above with reference to FIG. 9, the present disclosure may be implemented even with an electronic device 100 which does not include a speaker 110, with the speaker 110 of the electronic device 100 not including a the plurality of speaker units 111 nor the crossover filter 120. Nor is it required that a specification of the speaker 110 in the audio output device 200 is higher than that of the speaker 110 in the electronic device 100 simply that the audio output device 200 is able to acquire information for adjusting the slope of the crossover filter 120, or the like.

Functions related to artificial intelligence in the present disclosure may be operated through the processor 140 and memory 130 of the electronic device 100.

The processor 140 may comprise more than one processor core. Here, at the least one processor 140 may include at least one of the central processing unit "CPU", the graphic processing unit "GPU", or a neural processing unit "NPU", but is not limited to any of the examples of processor described above.

The CPU is a general-purpose processor which may perform not only general calculations but also artificial intelligence calculations, and may efficiently execute complex programs through a multi-layered cache structure. The CPU may be advantageous for a serial processing method that enables organic linkage between a previous calculation result and a next calculation result through sequential calculation. The processor 140 is not limited to the above examples of processing operation unless specified as the above-mentioned CPU.

The GPU is a processor for large-scale calculations such as floating-point calculations used for graphics processing, and may perform the large-scale calculations in parallel by integrating a large number of cores. In particular, the GPU may be advantageous for a parallel processing method such as convolution calculation compared to the CPU. In addition, the GPU may be used as the co-processor to supplement the function of the CPU. The processor 140 is not limited to the above examples of large scale calculations unless specified as the above-mentioned GPU.

The NPU is the processor specialized in the artificial intelligence calculation using an artificial neural network, and each layer included in the artificial neural network may be implemented in hardware, e.g., silicon. Here, the NPU is specially designed based on requirements of a company, and may thus have a lower degree of freedom than the CPU or the GPU. However, the NPU may efficiently process the artificial intelligence calculation required by the company. Meanwhile, as the processor 140 specialized for the artificial intelligence calculation, the NPU may be implemented in various forms such as a tensor processing unit "TPU", an intelligence processing unit "IPU", or a vision processing unit "VPU". The artificial intelligence processor 140 is not limited to the above example artificial intelligence calculations unless specified as the above-mentioned NPU.

In addition, at least one processor may be implemented in a system on chip "SoC". Here, the SoC may further include the memory 130 and a network interface such as a bus for data communication between the processor 140 and the memory 130 in addition to at least one processor 140.

In case that the system on chip SoC included in the electronic device 100 includes the plurality of processors 140, the electronic device 100 may use some of the plurality of processors 140 to perform the artificial intelligence calculation, e.g., calculation related to the learning or inference of the artificial intelligence model. For example, the electronic device 100 may perform the artificial intelligence calculation by using at least one of the GPU, the NPU, the VPU, the TPU, or a hardware accelerator that is specialized for the artificial intelligence calculation such as convolution calculation and matrix multiplication calculation among the plurality of processors. However, this configuration is only an example, and the electronic device may process the artificial intelligence calculation by using the general-purpose processor such as the CPU.

In addition, the electronic device 100 may perform calculation for the function related to the artificial intelligence by using multi-cores, e.g., dual-core or quad-core, included in one processor 140. In particular, the electronic device 100 may perform the artificial intelligence calculation such as the convolution calculation and the matrix multiplication calculation in parallel using the multi-cores included in the processor 140.

At least one processor 140 may perform the control to process the input data based on a predefined operation regulation or the artificial intelligence model, stored in the memory 130. The predefined operation regulation or the artificial intelligence model may be acquired by the learning.

Here, "acquired by the learning" may indicate that the predefined operation regulation or artificial intelligence model of a desired feature is acquired by applying a learning algorithm to a lot of learning data. Such learning may be performed by a device itself in which the artificial intelligence is performed according to the present disclosure, or may be performed by a separate server/system.

The artificial intelligence model may include a plurality of neural network layers. At least one layer has at least one weight value, and an operation of the layer may be performed through an operation result of a previous layer and at least one defined operation. Examples of the neural network may include a convolutional neural network "CNN", a deep neural network "DNN", a recurrent neural network "RNN", a restricted Boltzmann machine "RBM", a deep belief network "DBN"), a bidirectional recurrent deep neural network "BRDNN", a deep Q-network, and a transformer. However, the neural network of the present disclosure is not limited to the above examples unless otherwise specified.

The learning algorithm is a method of training a predetermined target device (e.g., robot) by using a large number of learning data for the predetermined target device to make a decision or a prediction for itself. Examples of the learning algorithms may include a supervised learning algorithm, an unsupervised learning algorithm, a semi-supervised learning algorithm, or a reinforcement learning algorithm. However, the learning algorithm of the present disclosure is not limited to the above-described examples unless otherwise specified.

The machine-readable storage medium may be provided in the form of a non-transitory storage medium. Here, the "non-transitory storage medium" may refer to a tangible device and only indicate that this storage medium does not include a signal, e.g., electromagnetic wave, and this term does not distinguish a case where data is semi-permanently stored in the storage medium and a case where data is temporarily stored in the storage medium from each other. For example, the "non-transitory storage medium" may include a buffer in which data is temporarily stored.

According to an embodiment, the methods according to the various embodiments disclosed in the present disclosure may be included and provided in a computer program product. The computer program product may be traded as a product between a seller and a purchaser. The computer program product may be distributed in a form of the machine readable storage medium, e.g., compact disc read only memory "CD-ROM", or may be distributed online, e.g., downloaded or uploaded, through an application store, e.g., PlayStore^{™}, or directly between two user devices, e.g., smartphones. In case of the online distribution, at least a part of the computer program product, e.g., downloadable app, may be at least temporarily stored or temporarily provided in the machine-readable storage medium such as a memory 130 included in a server of a manufacturer, a server of an application store, or a relay server.

Each component, e.g., module or program, according to the various embodiments described above may include a single entity or a plurality of entities, and some of the corresponding sub-components described above may be omitted or other sub-components may be further included in the various embodiments. Alternatively or additionally, some of the components, e.g., modules or programs, may be integrated into one entity, and may perform functions performed by the respective corresponding components before being integrated in the same or similar manner.

Operations performed by the modules, the programs, or other components according to the various embodiments may be executed in a sequential manner, a parallel manner, an iterative manner, or a heuristic manner, at least some of the operations may be performed in a different order or be omitted, or other operations may be added.

Meanwhile, the term "~er/~or" or "module" used in the present disclosure may include a unit including hardware, software or firmware, and may be used interchangeably with the term, for example, logic, a logic block, a component or a circuit. The "~er/~or" or "module" may be an integrally formed component, or a minimum unit or part performing one or more functions. For example, the module may include the application-specific integrated circuit ASIC.

The various embodiments of the present disclosure may be implemented by software including an instruction stored in the machine-readable storage medium, for example, the computer-readable storage medium. A machine may be a device that invokes the stored instruction from the storage medium, may be operated based on the invoked instruction, and may include the electronic device, e.g., electronic device 100, according to the disclosed embodiments.

In case that the instruction is executed by the processor, the processor may directly perform a function corresponding to the instruction or other components may perform the function corresponding to the instruction under the control of the processor. The instruction may include a code provided or executed by a compiler or an interpreter.

Although the embodiments of the present disclosure are shown and described as above, the present disclosure is not limited to the above-mentioned specific embodiments, and may be variously modified by those skilled in the art to which the present disclosure pertains without departing from the accompanying claims.

## Claims

1. An electronic device (100) comprising:
a speaker (110) including a crossover filter (120) configured to separate an input audio signal into a plurality of different frequency bands, and a plurality of speaker units (111) corresponding to the plurality of frequency bands;
a memory (130) storing data for music content; and
a processor (140) configured to:
adjust a slope of the crossover filter (120) in a range where the crossover filter (120) filters the audio signal of each of the plurality of frequency bands based on at least one of a property of the music content or based on a user's taste for sound, and
control the crossover filter (120) to filter the audio signal corresponding to the music content based on the adjusted slope while the music content is output through the speaker (110).

2. The device as claimed in claim 1, wherein the data includes metadata indicating the property of the music content, and
wherein the processor (140) is further configured to identify the property of the music content based on the metadata.

3. The device as claimed in claim 1, further comprising an input device (170),
wherein the processor (140) is further configured to adjust the slope based on the at least one of the user taste or the property of the music content in case of receiving a user input for selecting the user taste through the input device (170).

4. The device as claimed in claim 1, wherein the processor (140) is further configured to identify the property of the music content based on at least one of a music content genre, a music content performer, or an instrument type used in the music content, included in metadata.

5. The device as claimed in claim 1, wherein the plurality of speaker units (111) includes:
a woofer that outputs the sound of a low frequency band, and
a tweeter that outputs the sound of a frequency band which is higher than the low frequency band.

6. The device as claimed in claim 1, wherein the processor (140) is further configured to:
adjust the slope to correspond to a first filter in case that the property of the music content is a first property that includes a transient feature of a predetermined threshold level or above, and
adjust the slope to correspond to a second filter having a slope higher than the first filter in case that the property of the music content is a second property that includes the transient feature below the threshold level.

7. The device as claimed in claim 1, further comprising a sensor device (160) including at least one sensor,
wherein the processor (140) is further configured to:
acquire information for a user listening height through the sensor device (160), and
control the speaker (110) to output the music content by compensating for delay caused by a difference between the listening height and a reference height in case that the difference between the user listening height and the predetermined reference height is a threshold value or more.

8. The device as claimed in claim 7, wherein the processor (140) is further configured to:
acquire information for at least one user location through the sensor device (160), and
adjust the slope to correspond to a third filter having a slope higher than the second filter in case of identifying that the at least one user location is outside a predetermined threshold range based on the information for the user location.

9. The device as claimed in claim 1, wherein the processor (140) is further configured to:
identify the property of the music content for each section in the music content based on a pattern of the audio signal corresponding to the music content while the music content is output through the speaker,
adjust the slope for each section based on the property of the music content identified for each section, and
control the crossover filter to filter the audio signal corresponding to the music content based on the slope adjusted for each section.

10. The device as claimed in claim 1, further comprising an output device (180),
wherein the processor (140) is further configured to control the output device to output information for guiding a type of filter corresponding to the adjusted slope while the music content is output through the speaker (110).

11. The device as claimed in claim 1, wherein the processor (140) is further configured to identify the property of the music content by inputting metadata into a neural network model trained to output information for the property of the music content.

12. A controlling method of an electronic device, the method comprising:
adjusting a slope of a crossover filter in a range where the crossover filter, included in a speaker and configured to separate an input audio signal into a plurality of different frequency bands, filters the audio signal of each of the plurality of frequency bands, based on at least one of a property of music content or a user's taste for sound (S810); and
controlling the crossover filter to filter the audio signal corresponding to the music content based on the adjusted slope while the music content is output (S820).

13. The method as claimed in claim 12, further comprising identifying the property of the music content based on metadata indicating the property of the music content.

14. The method as claimed in claim 12, wherein the adjusting the slope comprises, based on a user input for selecting the user taste being received, adjusting the slope based on the at least one of the user taste or the property of the music content.

15. The method as claimed in claim 12, wherein the identifying the property of the music content comprises, identifying the property of the music content based on at least one of a music content genre, a music content performer, or an instrument type used in the music content, included in metadata.
